# EUROPEAN PATENT APPLICATION

(11) **EP 4 353 423 A1**
(43) Date of publication of application: **17.04.2024**
(21) Application number: 23202733.4
(22) Date of filing: 10.10.2023
(51) Int. Cl.: B25J 9/04, B21D 43/00, B25J 18/02

(54) **ROBOTIC MACHINE AND HANDLING DEVICE**

(30) Priority: 11.10.2022 IT 202200020901
(71) Applicant: SCM Group S.p.A., 47921 Rimini (RN) (IT)
(72) Inventor: CARDILLO, Cristian, 47921 RIMINI (IT); MANDOLESI, Stefano, 47921 RIMINI (IT)
(74) Representative: Tiburzi, Andrea

(57) **Abstract**

The present invention concerns a machine (2) for machining pieces made of wood, plastic, glass, metals, composite materials, comprising a working plane (21), intended to support at least one panel (P) to be machined, and a machining group (24), for machining the piece when it is placed on said working plane (21).

The present invention also concerns a handling device (4).

## Description

### Field of invention

More specifically, the invention concerns a machine tool, in particular a panel saw, designed and created in particular to have a handling device capable of adapting to the different dimensions of the panels and capable of covering a larger work area than similar systems.

In the following, the description will be addressed to a panel cutting machine, in particular wooden panels, but it is clear that it should not be considered limited to this specific use, it can in fact be addressed to other types of machines, such as centers machines, edge-banders, drilling machines, sanders, squaring machines.

### Prior art

As is well known, there are currently different types of machine tools, such as wooden panel saws and the like, used to make cuts on panels or packs of panels with a disc blade.The panel saws can be loaded manually or are equipped with devices for moving panels, such as robots, which must adapt to panels of different sizes. In general, in fact, panel saws can section large panels into smaller ones, according to logical cuts, to obtain the desired dimensions and optimize the consumption of material (generally wood). In these cases, therefore, the cutting machines are equipped with handling devices, which must be able to adapt to panels of different sizes, very large or very small, rotate them in order to unload them in special magazines, or load them and arrange them in a that the cutting machine can cut them appropriately. Furthermore, the manipulators must be able to reach even the areas of the machine further away than the manipulator itself, to cover the entire working plane of the machine.

There are currently several systems for manipulating panels or panel cuttings on panel saws. An example of a handling device for panel saws is described in the European patent EP3647004B1, in which the panel saw has a working plane, on which the panels can be moved along an advancement direction, a cutting line arranged transversely with respect to the direction of advancement of the panels, a crosspiece, also arranged transversely with respect to the direction of advancement of the panels, or parallel to the cutting line, immobile above the working plane.

Mobile grippers are arranged on said crosspiece, each designed to clamp and move a panel or a portion of a panel, to position it on the cutting line or exclude it from the working plane. The cutting machine also features a robotic manipulator with gripping unit.

This solution, although it can handle even small panels, presents problems in the movement and rotation of large panels (by large meaning when the panel has a surface comparable to that of the working plane), as well as in achieving all the areas of the working plane.

A further example of a handling device for a cutting machine is described in the European patent number EP3533572B1, which always provides a working plane and a cutting line on said working plane. The cutting machine according to the aforementioned patent also has a handling device for moving a piece or panel lying on the working plane, having a base structure that can be arranged above the workpiece. This basic structure is mechanically connected to a manipulator robot. The basic structure can be moved by the manipulator along the three Cartesian spatial directions.

Furthermore, the handling device is also capable of performing a rotary movement around a vertical axis and is rotatable around a vertical axis by means of an actuation of the manipulator robot.

A technical problem of the solution is the fact that it is very limited in its ability to adapt to small panels.

### Scope of the invention

In light of the above, it is therefore the scope of the present invention to propose a machine, in particular a panel saw capable of overcoming the technical limits of those according to the prior art.

Another scope of the invention is to propose a versatile panel handling device, capable of adapting to panels of any size and being able to move them on the working plane.

A further scope of the present invention is to propose a panel handling device, capable of reaching all areas of the working plane of the machine to which it is associated.

### Object of the invention

It is therefore, specific object of the present invention a machine for working pieces made of wood, plastic, glass, metals, composite materials, comprising a working plane, designed to support at least one panel to be worked, and a working unit, for working the piece when it is arranged on said working plane, characterized in that it comprises a moving unit for loading and/or unloading said at least one panel onto/from said working plane, and a handling device, coupled to said moving unit, wherein said moving unit comprises a base frame, rotatably coupled to said moving unit, and having first moving means, a longitudinal frame, coupled to said first moving means of said base frame, to allow said longitudinal frame to translate with respect to said base frame along a first direction (A), wherein said longitudinal frame comprises second moving means, for moving said longitudinal frame with respect to said basic frame along a second direction (B) perpendicular to said first direction, and one or more transversal beams (431, 432), equipped with gripping members, such as vacuum cups, associated with said longitudinal frame.

Always according to the invention, said one or more transversal beams are slidingly associated with said longitudinal frame, and said machine may comprise third moving means to move said one or more transversal beams along said second direction, with respect to said longitudinal frame.

Still according to the invention, said first moving means may comprise a first actuator or electric motor, associated with translation members, by means of a coupling plate, wherein said translation members comprise at least two return pulleys, arranged at the ends of the base frame, and a transmission means, such as a belt, arranged around said two return pulleys, wherein said transmission means are associated with said longitudinal frame.

Advantageously according to the invention, said second moving means may comprise a pneumatic moving unit, to allow relative moving of the longitudinal frame with respect to the base frame along said second direction.

Further according to the invention, said pneumatic moving unit may be a piston-cylinder unit having a cylinder, fixed to said base frame and a piston fixed to said longitudinal frame.

Preferably according to the invention, said third moving means may comprise a second actuator, such as an electric motor and similar, further translation members each having a couple of pulleys, and a respective transmission means, in particular a belt, each coupled to a respective transversal beam.

Always according to the invention, said machine may comprise two transversal beams.

Still according to the invention, said gripping members may be movable on said transversal beams along said first direction and/or along a direction perpendicular to the plane identified by the respective transversal beam on which it is arranged.

Advantageously according to the invention, said moving unit may be a robot comprising a base, fixable to the ground, an articulated arm having a support, capable of rotating with respect to said base, about a vertical axis, two arms, wherein the first arm has one end connected by means of a first joint to said support, while the second arm is connected to a first end, to the second end of said first arm by means of a second joint, and a pin, coupled to said handling device, wherein the handling device is capable of rotating around said pin.

Further according to the invention, said working unit comprises a cutting station, wherein said cutting station comprises a cutting unit equipped with at least a disc-shaped blade for cutting at least one panel along a cutting line, and may comprise at least one gripping and moving device, configured to advance the panels along said working plane through the cutting station.

Preferably according to the invention, said machine may comprise a movable crosspiece along a first axis, parallel to the development axis of said working plane, and comprising a working head, configured for the removable coupling with at least one working tool, wherein said working head is movable along at least a second linear translation axis, perpendicular to said first axis, and is rotating around one or more rotation axis.

It is further object of the present invention an handling device for handling and abutting at least one panel on a working plane of a machine for working wood, comprising a longitudinal frame, at least one supporting element, associated with said longitudinal frame, and at least one gripping unit coupled to said supporting element and comprising at least one gripping device, such as a vacuum cup, intended to contact and grip at least one panel, wherein said supporting element comprises fourth displacement guides, wherein the gripping unit is slidingly coupled to said fourth displacement guides, to be movable along a second direction (B), substantially perpendicular to a first direction, and wherein the gripping unit comprises an adjustment pin, to which said gripping device is rotatably coupled, so that it can rotate around an axis substantially perpendicular respectively to a first direction or to a second direction, allowing the at least one panel to be correctly aligned when it is contacted and abutted to the working plane of the machine.

Always according to the invention, the gripping unit may be movable between a first position, or resting position, and a second position, or operating position, and it may comprise first elastic means, coupled to said at least one supporting element and to the gripping unit, and configured to keep the gripping unit in said first position until the at least one panel is abutting the working plane.

Still according to the invention, the first elastic means may comprise a spiral spring and/or a pneumatic spring and/or a pneumatic actuator.

Further according to the invention, the gripping device may be movable between a first position, or resting position, and a second position, or operating position, and said device may comprise second elastic means coupled to said at least one gripping unit and to said gripping device and configured to keep the gripping device in the first position until said at least one panel is abutting to the working plane.

Advantageously according to the invention, said first elastic means may comprise at least one flexible rod integrally coupled to the gripping device and constrained by contact with the at least one gripping unit.

Preferably according to the invention, said longitudinal frame may comprise fifth guides, and the at least one supporting element may be slidingly coupled to said fifth guides, to be movable along the first direction, allowing the at least one panel to be correctly aligned when it is positioned in abutment on the working plane of the machine.

Always according to the invention, said at least one supporting element may be movable between a first position, or resting position, and a second position, or operating position, and said device may comprise third elastic means coupled to the at least one supporting element and to the frame and configured to keep the at least one supporting element in the first position until the at least one panel is abutted to the working plane.

### Brief description of the figures

The present invention will be now described, for illustrative but not limitative purposes, according to its preferred embodiments, with particular reference to the figures of the enclosed drawings, wherein:
figure 1 shows an overall view of a woodworking work cell including a handling device according to the present invention;
figure 2A shows a first partial perspective view of the work cell of figure 1;
figure 2B shows a second exploded view of the work cell of figure 1;
figure 3 shows a perspective view of a handling device coupled to a robot;
figure 4 shows a view from the other of the handling device installed on a robot;
figure 5 shows a side view of a handling device in a first operating position;
figure 6 shows a top view of the handling device according to figure 5;
figure 7 shows a side view of a handling device in a second operating position;
figure 8 shows a top view of the handling device according to figure 7; and
figure 9 shows a detail of the handling device according to the present invention;
figure 10 shows a gripping unit of the handling device, according to the present invention;
figure 11 shows the gripping unit of figure 10 in a first operating configuration;
figure 12 shows the gripping unit of figure 10 in a second operating configuration; and
figure 13 shows the gripping unit of figure 10 in a third operating configuration.

### Detailed description

In the various figures the similar parts will be indicated with the same numerical references.

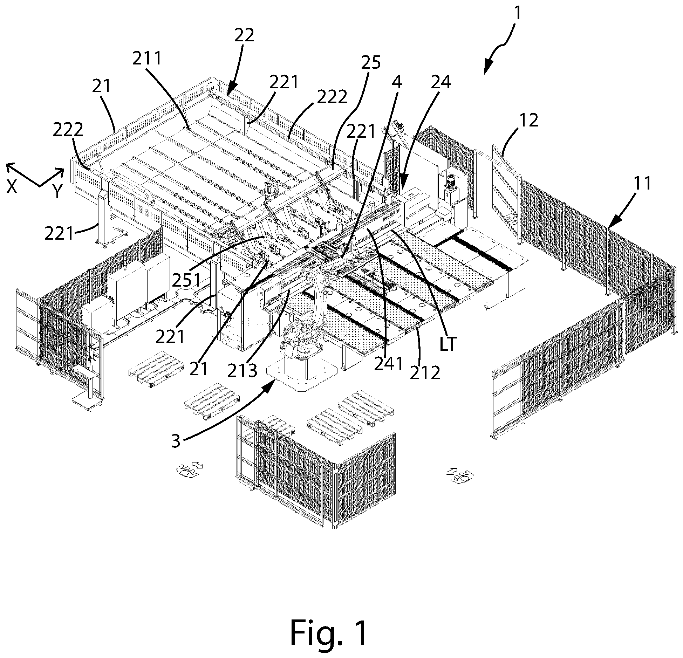

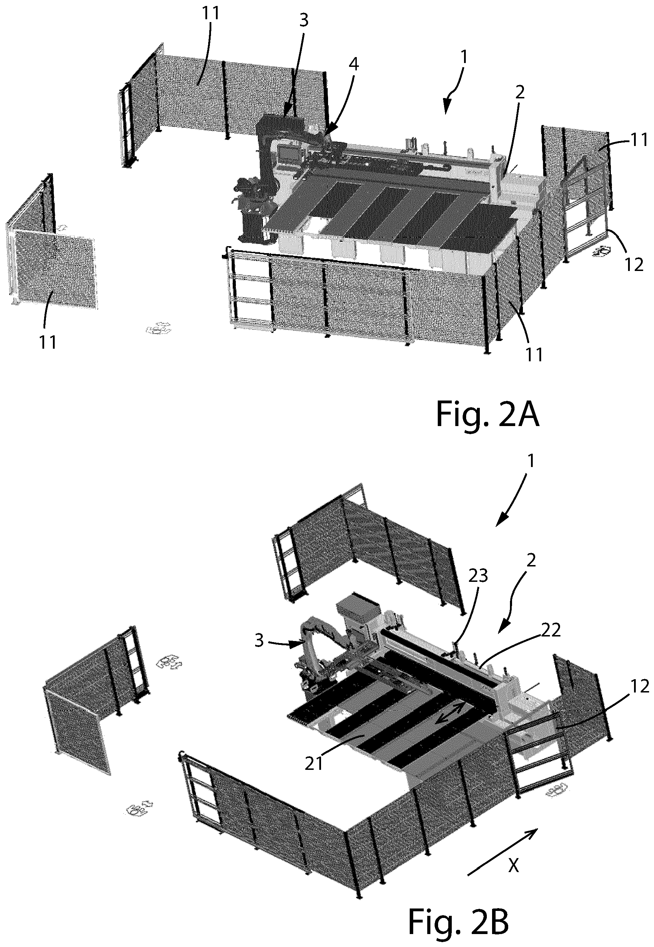

Referring to figures 1, 2A, and 2B, a work cell 1 is observed, comprising a cutting machine 2, having a movement unit 3, i.e. a robot 3, and a handling device 4.

The work cell 1 has bulkheads 11 to delimit the work area of the cutting machine 2. In one of said bulkheads 11 there is also a door or gate 12 for access to the working area.

The cutting machine 2 includes a working plane 21, on which the panels (not shown in the figures) to be machined and/or machined and/or in machining can be arranged.

Referring in particular to figure 1A, the cutting machine 2 also comprises, as can be seen, a frame 22, which in turn comprises a plurality of uprights 221, preferably four, and two longitudinal guide longitudinal members 222, parallel to each other, each of which extends in a direction X, which connect at least one pair of uprights 221 together along said direction X.

The cutting machine 2 also comprises a working unit 24, in particular a cutting station 240, which separates the working plane 21 into two zones or half-planes, a first half-plane 211 upstream of the cutting station 240, and a second half-plane 212 downstream of the cutting station.

Said cutting station 240 includes a cutting unit (not shown in the figures), provided with a blade and an engraver, installed to rotate around respective rotation axes parallel to each other, and to pass from a rest condition, in which they are arranged below said working plane 21, in an operating condition, in which they protrude with respect to said working plane 21, through a slot 213, to perform, by moving the cutting unit itself, the cutting of the panels along a cutting line LT.

The panel saw 2 also includes at least one gripping and moving device 25, also called "pusher", comprising a plurality of grippers 251. The gripping and moving device 25 is configured to advance the panels being machined along the first half-plane 211 towards the second half-plane 212 (and vice versa), through the cutting station 240.

In other embodiments, there are two or more gripping and moving devices 25.

The cutting station 240 further includes a presser 241, movable towards and away from/to the working plane 21, to allow the blocking of the panel or packs of panels to be cut by the cutting unit.

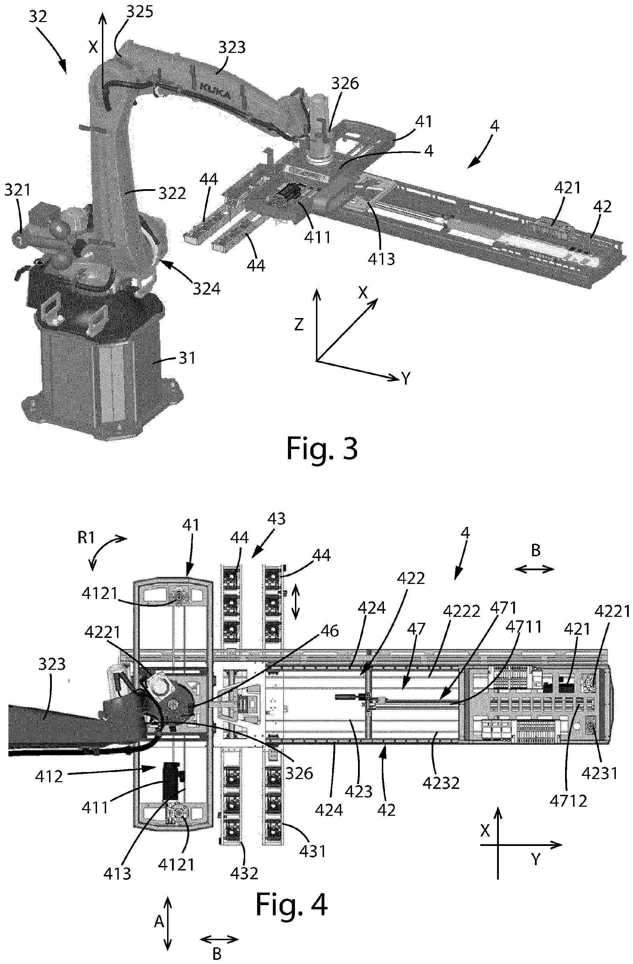

The robot 3 is arranged laterally to the working plane 21, and can also be seen in greater detail in figures 3 and 4. The robot 3 comprises a base 31, to fix said robot 3 to the ground, an articulated arm 32, having a support 321 capable of rotate with respect to said base 31 around the vertical axis Z, shown in the figure, and two arms 322 and 323, in which the first arm 322 has an end connected by a first joint 324 to said support 321, while the second arm 323 is connected, at a first end, to the second end of said first arm 322 by means of a second joint 325.

By means of the aforementioned articulation, the arm 323 can be moved in space according to different degrees of freedom.

In other embodiments, the robot 3 may have a different number of degrees of freedom. By way of example, in some embodiments, the cutting machine 2 can include an anthropomorphic arm, with further degrees of freedom on each joint. In other embodiments, it is possible to provide robots 3 with a greater or lesser number of arms, according to the needs of moving the panels.

On said second end of said second arm 323 a pin 326 is provided for coupling to the handling device 4 for the manipulation, or movement of the panels from and onto the working plane 21, preferably from and onto said second half-plane 212, of said cutting machine 2.

The manipulation device 4 includes a base frame 41, having, above, coupling members at the second end of said second arm 323, to rotate according to the arrow R1 (i.e., around an axis parallel to the Z axis). In particular, the pin 326, arranged on the second end of the second arm 323, is associated with said coupling members indicated with the numerical reference 46.

The base frame 41 also includes first movement means, having a first actuator or electric motor 411, associated with translation members 412, by means of a coupling plate 413. The translation members 412, in turn, comprise two return pulleys 4121, arranged at the ends of the base frame 41, and a toothed belt 413, arranged around the two return pulleys 4121. In other embodiments said first movement means can be of another type, such as, for example, pneumatic or hydraulic.

Furthermore, the manipulation device 4 also includes a longitudinal frame 42, coupled at the top by means of coupling members to said toothed belt 413 of said base frame 41, to allow relative movement between said longitudinal frame 42 and said base frame 41 along a direction A on respective first guides (not visible in the figures).

The longitudinal frame 42 also includes second movement means, i.e. a pneumatic movement or actuation unit 47, having a pneumatic actuator 471, comprising a piston-cylinder group, arranged to allow the relative movement of the longitudinal frame 42 with respect to the base 41 along a direction B, on respective second guides 424 parallel to each other. In other embodiments said second movement means can be of another type, such as electric or hydraulic.

In the present embodiment, the actuator constituted by the piston-cylinder group 471 comprises a cylinder 4711 fixed to the base frame 41, while the piston 4712 is fixed to the longitudinal frame 42. In this way, the extraction movement of the piston 4722 from cylinder 4721 causes the relative movement of the longitudinal frame 42 with respect to the base frame 41.

The longitudinal frame 42 also includes third movement means, having a second actuator 421, such as an electric motor, also associated with respective further translation members 422 and 423, comprising two pairs of pulleys 4221 and 4231, and a respective toothed belt translation 4222 and 4232.

In other embodiments, not shown in the figures, the toothed belt 413 and the translation toothed belts 4222 and 4232 can be different motion transmission means, such as for example chains.

The handling device 4 also includes gripping members or support elements 43, for manipulating the panels, comprising two transverse beams 431 and 432, arranged perpendicularly to said longitudinal frame 42, and each equipped with one or more gripping units 44, each comprising a gripping device 441, i.e., a vacuum suction cup.

The gripping units 44 are movable on said transverse beams 431 and 432.

Each transversal beam 431 and 432 is coupled respectively to one of said translation toothed belts 4222 and 4232 of the longitudinal frame 42, so that when the second actuator 421 is operated, thanks to the movement of one or both translation belts 4222 and 4232, said transverse beams 431 and 432 can be moved independently with respect to each other and both with respect to the longitudinal frame 42 on respective third guides (not visible in the figures).

Each vacuum suction cup 441 of each gripping unit 44 of said plurality of gripping units 44 can, furthermore, be movable along a direction perpendicular to the plane identified by the transversal bar 431 or 432, on which it is arranged and/or along said first direction A.

Each gripping device 441 of said plurality of gripping devices 441 is equipped with a vacuum generation system that can be activated selectively with respect to the other vacuum suction cups 441, depending on the dimensions of the panel to be handled.

In other embodiments, the gripping units 43 include, instead of the gripping devices 44, other types of gripping devices, such as, for example, pliers or clamps.

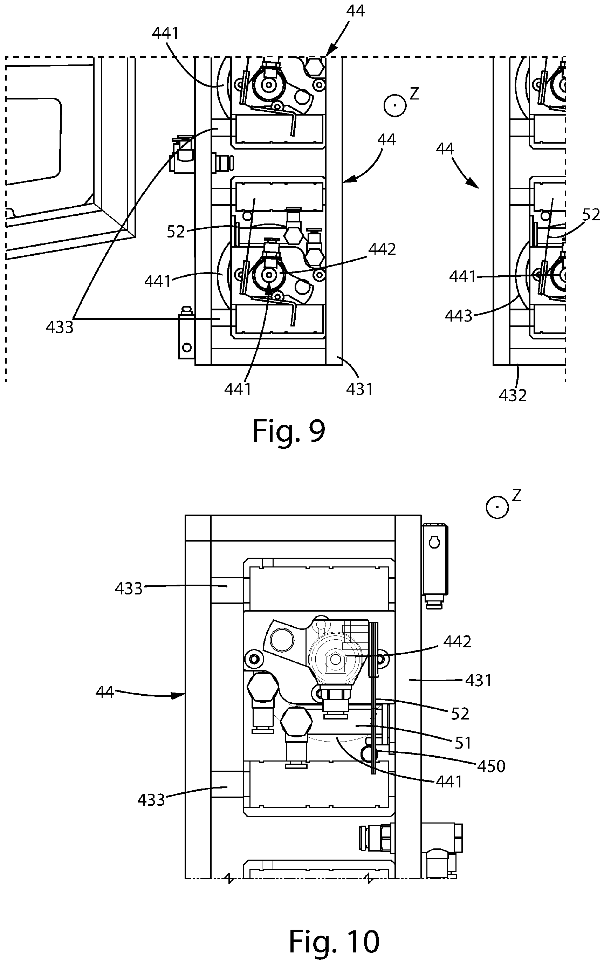

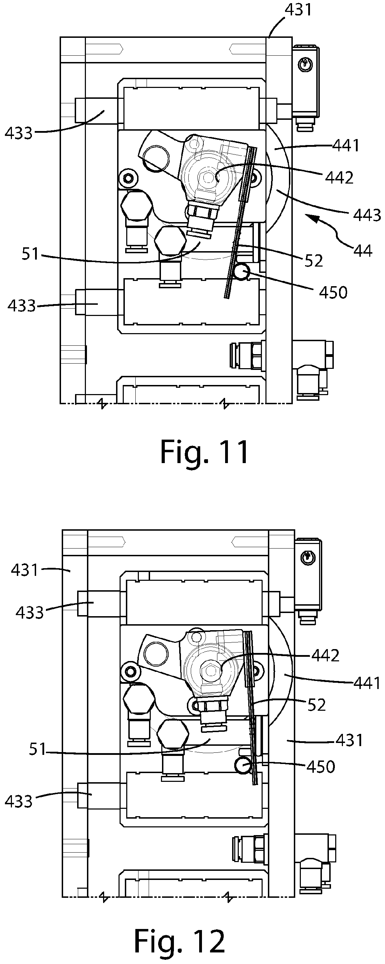

Referring to figures 9, 10, 11, 12, and 13, the structure and operation of the gripping units 44 are described in greater detail.

In particular, each gripping unit 44 includes an adjustment pin 442, associated with the gripping unit 44 itself, and a gripping device 441 (the actual vacuum suction cup), rotatably coupled to said adjustment pin 442, to be able to rotate around a Z axis substantially perpendicular to the first A or second B direction respectively.

This allows the at least one panel to be correctly aligned when it is contacted and positioned against the working plane 21 of the machine 2.

In this way, the handling device 4 allows, through the mechanical system which will be illustrated below, to correctly align the panels on the loading surface and partially cushion the impact resulting from the stop.

The panels, in fact, can be taken from a stack in an orientation that is not perfectly aligned for cutting and/or machining.

The panels must therefore be aligned using a stop located laterally on the edge of a loading surface.

The handling device 4, therefore, approaches the panel towards a stop to align it, but if the vacuum suction cups (i.e., the gripping devices 441) were rigidly fixed on the support elements 43 (i.e., the transversal beams 431 and 432), the alignment of the panel with the stop would not be possible.

Instead, each gripping device 441 (vacuum suction cup) is free to rotate around said adjustment pin 442 of the gripping unit 44, in which it is included (to accompany the rotation of the panel), and each gripping unit 44 can slide in the direction perpendicular to the stop (to accompany the translation of the panel).

Alternatively, each gripping device 441 is integral with the adjustment pin 442, and each adjustment pin 442 is free to rotate in a respective seat (or bushing) obtained in each gripping unit 44.

The transverse beams 431 or 432 of the handling device 4 are also free to translate along their own extension direction, i.e. the direction indicated with the arrow A.

In a preferred embodiment, the rest position of the gripping device 441, of the gripping unit 44, and of the support elements 43, or the transverse beams 431 or 432, is made possible by respective return systems.

In fact, each gripping unit 44 can comprise first elastic means 51, such as for example a spiral spring, or a gas or pneumatic spring, which engages between the gripping unit 44 and the support element 43 (i.e., the beam 431 or 432), on which the gripping unit 44 itself is mounted.

These first elastic means 51 are configured to apply on the gripping unit 44 a force such as to allow it to slide along fourth guides 433, in a direction opposite to the movement of the handling device 4, or to the direction of approach of a panel to the stop, when a panel is brought to rest on the working plane.

In this way, the gripping unit 44 can pass from a first position, or rest position, to a second position, or operating position, and vice versa.

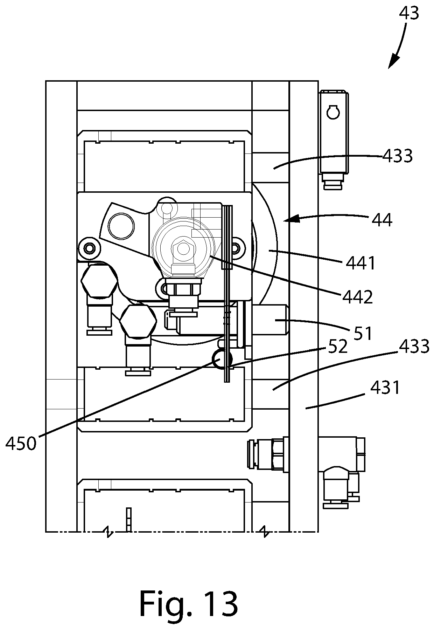

Referring to figure 13, in particular, the gripping unit 44 is in the first position when the handling device 4 does not grip any panel, or when the handling device 4 has gripped a panel but has not yet positioned it against the working plane.

Instead, as shown in figures 10-12, in the second position the gripping unit 44 is translated along the fourth guides 433, by a distance such as to compensate for the misalignment of the panel which has been positioned on the working plane and brought to rest.

After the panel is positioned against the working plane and released, the first elastic means 51 returns the gripping unit 44 to the rest position.

In this case, the gripping unit 44 performs a translation along the fourth guides 433 opposite to that carried out to compensate for the panel stop.

In a preferred embodiment, the first elastic means 51 are actuators, for example of the pneumatic type, optionally controlled by a logic control unit of the machine (not shown in the figures), which impose a first force or greater pressure during the clamping or gripping the panel, as the gripping units 44 must remain rigid to allow the panel to be gripped efficiently and safely.

When the panel is brought to the stop, the actuators impose a second force or smaller pressure, allowing the translational movement of each grip group 44 to accommodate the stop itself.

In a preferred embodiment, each gripping unit 44, having a respective gripping device 441, can be provided with second elastic means 52 for regulating the position of each gripping device 44 around the corresponding adjustment pin 442 (or of the pin 442, integral with the gripping device, 441 in the respective seat or bushing obtained in the gripping unit 44).

These second elastic means 52, for example, a spiral spring or a gas or pneumatic spring, are placed between each gripping device 441 and the gripping unit 44 which includes it.

The second elastic means 52 are configured to apply to the gripping device 44 to which they are coupled, a force such as to allow its rotation around the adjustment pin 442 when a panel is positioned on the working plane and brought to the stop.

In a preferred embodiment, these second elastic means 52 comprise two slats made of flexible metal, which engage on a suitable seat obtained in the fixed frame (represented by the gripping unit 44).

In a preferred embodiment, the slats engage on a stop pin 450, integral with the gripping unit 44, i.e. the slats form a "V" around the stop pin 450.

In detail, when the handling device 4 grips a panel, each gripping device 441 is kept in a first position, or rest position, by the force exerted by the second elastic means 52 on the seat of the gripping unit 44, for example on the stop pin 450.

In this first position, no external force acts on the gripping device 441, except the weight of the gripped panel.

When the handling device brings the panel on the working plane 21 of the cutting machine 2 into contact with the stop, the panel itself rotates to align itself with the stop itself.

If each gripping device 441 were rigidly fixed to the corresponding gripping unit 44, the panel would exert such a force as to cause its detachment from the gripping device 441 itself. Instead, the gripper 441 compensates for the rotation of the panel, in turn rotating around the adjustment pin 442.

The second elastic means 52 deforms under the thrust of the panel and allows the gripping device 441 to rotate. The force exerted by the second elastic means 52 is sufficiently high to keep the panel firmly gripped during the transport steps, but not to prevent its alignment when it is brought into contact with the stop.

Once the panel is brought to the stop, the gripping device 441 is rotated and is in a second position or operating position.

Finally, when the panel is released from the handling device, the second elastic means 52 returns the corresponding gripping device 441 to the first position.

In the event that each gripping device 441 is integral with the adjustment pin 442, and each adjustment pin 442 is free to rotate in a respective seat (or bushing) obtained in each gripping unit 44, the second elastic means 52 are coupled to the gripping device 441, or to the adjustment pin 442, but the operation of the gripping device 441-gripping unit 44 assembly remains conceptually unchanged.

In a further embodiment, the second elastic means 52 are actuators, for example of the pneumatic type, optionally controlled by a logic control unit (not shown in the figures) of the cutting machine 2, which imposes a first force or greater pressure in panel gripping step, as the gripping devices 441 must remain rigid around the adjustment pin 442 to allow the panel to be efficiently and safely gripped.

As the panel is brought to rest, the actuators impose a second, smaller force or pressure, allowing rotary movement of each gripper 441 around pin 442 to accommodate the panel rest.

Furthermore, in a preferred embodiment, the longitudinal frame 42 includes fifth guides (not shown in the figures), on which each support element 43 is constrained to translate.

The fifth guides allow each support element 43 to translate with respect to the frame 42 when a panel is positioned against the working plane 21 of the cutting machine 2.

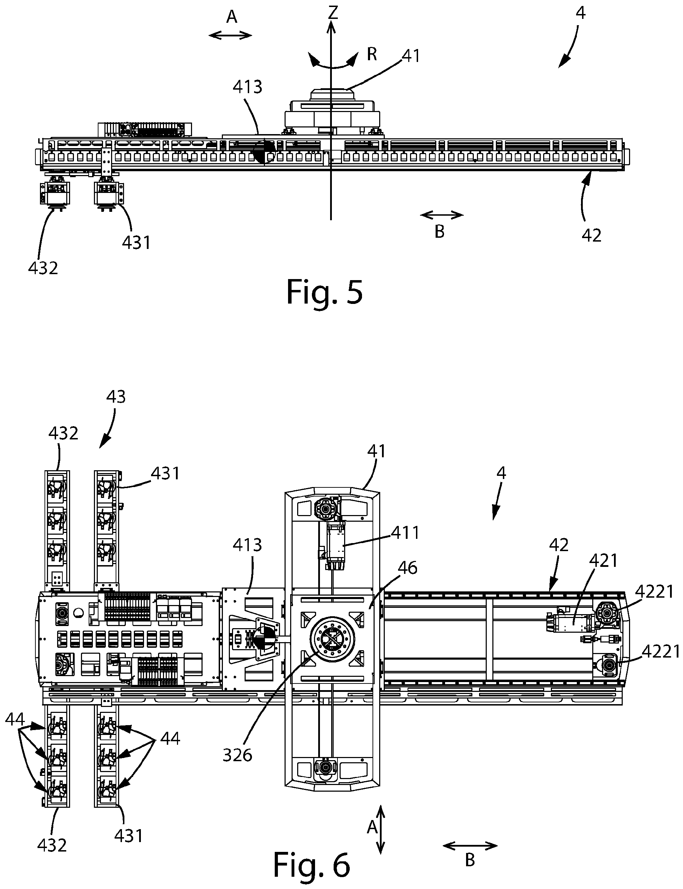

The translation of a support element 43 resulting from the abutment of a panel occurs along the direction of extension of the element 43 itself, i.e. along direction A of figure 6.

This translation has the function of compensating the different movement along the direction A of two support elements 43, which grip the same panel, when it is brought to rest on the working plane.

Furthermore, the handling device 4 can comprise third elastic means (not shown) interposed between each support element 43 and the frame 42.

These third elastic means have a similar function to that of the first and second elastic means and are configured to exert on each support element 43 a force such as to allow the element 43 itself to pass from a first position, or rest position, to a second position, or operating position, and vice versa.

The third elastic means can be, for example, a spiral spring or a gas or pneumatic spring. In further embodiments, said third elastic means are actuators, for example pneumatic, optionally controlled by a logic control unit (not shown) of the machine, which imposes a greater first force or pressure when gripping the panel, as the support elements 43 must remain rigid to allow the panel to be efficiently and safely gripped.

When the panel is brought to the stop, the actuators impose a second force or smaller pressure, allowing the translational movement of each support element 43 to accommodate the panel stop.

The operation of the cutting machine 2 described above is as follows.

When it is necessary to carry out the machining of a panel, it is necessary to precisely arrange (but also remove after machining) the panel on the first half-plane 211 and/or on the second half-plane 212 of the work table 21 of said cutting machine 2, taking it from a pile possibly arranged in a warehouse located near the cutting machine 2 itself (or arrange it in a pile possibly placed in a warehouse placed near the cutting machine 2).

The robot 3, through the various joints 324 and 325, positions the handling device 4 at the panel.

The handling device allows the movement of the longitudinal frame 42 along the direction B by moving the coupling plate 413 by driving the electric motor 411. In addition, the entire handling device 4 can also rotate with respect to the arrow R around the vertical axis Z.

Once the handling device 4 has been positioned above the panel, by operating the second actuator 421, which is always an electric motor, it allows the movement of the transverse beams 431 and 432, independently of each other and with respect to the longitudinal frame 42. Furthermore, the most appropriate positioning of the handling device 4 also occurs thanks to the rotation of the entire handling device 4, according to the arrow R, as well as by moving the longitudinal frame 42 with respect to the base frame 41, through the operation of the first actuator 411 (direction A).

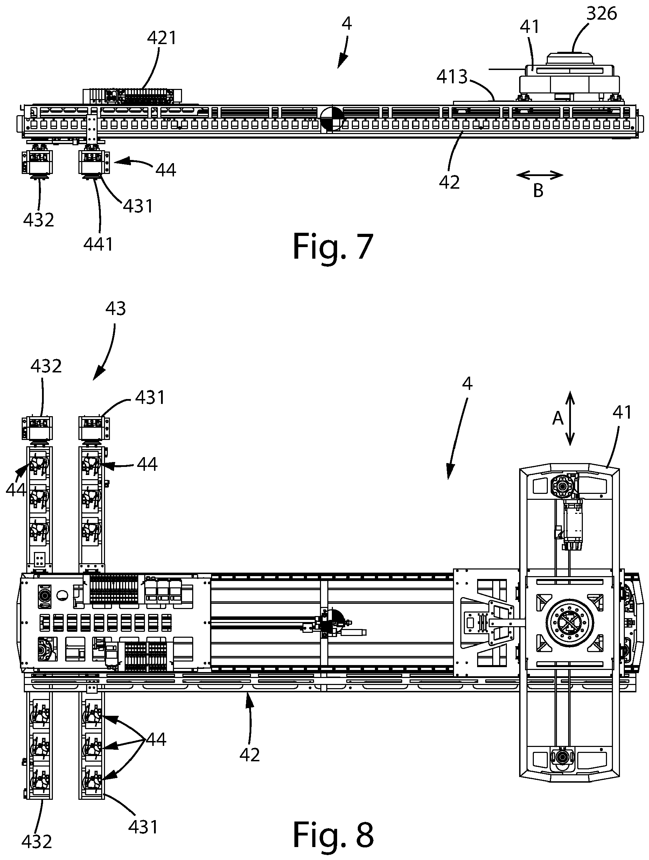

Referring to figures 5 and 6, as well as to figures 7 and 8, the relative arrangement of the longitudinal frame 42 with respect to the base frame 41 is observed in two distinct possible configurations, which make the handling device particularly flexible for the acquisition of the panels ( not visible in the figures).

Subsequently, once the handling device 4 has been positioned above the panel, arranging the two transversal beams 431 and 432 adequately spaced apart, the suction cups 441 can be moved by means of each gripping unit 44 so as to arrange themselves in the most uniform way possible and couple the panel in the safer way.

In other embodiments, the handling device 4 can provide a different number of transverse beams.

As can be seen, thanks to different degrees of freedom, the handling device 4 is able to adapt to a high variety of panel sizes. In other words, the handling device can handle both large panels, meaning in this case panels for example of the order of 4250 x 24040 mm, i.e. the maximum size of panels that can be loaded on the working plane 21 of the cutting machine 2, or small ones, or of the order of 150 x 150 mm cm. The maximum and minimum dimensions of the panels to be machined and, therefore, the dimensions of the handling device 4 can vary depending on the dimensions of the cutting machine 2.

In other embodiments, the robot 3 including the handling device 4 can be associated, for the loading/unloading of pieces, with other types of machines, such as for example:
- a work center, equipped with a workpiece support surface and a movable crosspiece along the support surface and equipped with a machining head with interchangeable tools (blades, cutters, drill bits, etc.) and equipped with two linear translation axes and one, two, three or more rotational axes;
- passage machines, i.e. machines in which the piece to be worked is moving during machining via handling means such as conveyor belts or rollers, and the machining units can translate along one or more directions and/or rotate around one or multiple axes, such as edge-banding machines, sanding machines, drilling machines.

Based on the above, the following clauses define the handling device 4.
1. Handling device (4) for handling and abutting at least one panel on a working plane (21) of a machine (2) for working wood, comprising
   a longitudinal frame (42),
   at least one supporting element (43), associated with said longitudinal frame (42), and
   at least one gripping unit (44) coupled to said supporting element (43) and comprising at least one gripping device (441), such as a vacuum cup, intended to contact and grip at least one panel (P),
   wherein said supporting element (43) comprises fourth displacement guides (433),
   wherein the gripping unit (44) is slidingly coupled to said fourth displacement guides (433), to be movable along a second direction (B), substantially perpendicular to a first direction (A), and
   wherein the gripping unit (44) comprises an adjustment pin (442), to which said gripping device (441) is rotatably coupled, so that it can rotate around an axis (Z) substantially perpendicular respectively to a first direction (A) or to a second direction (B), allowing the at least one panel (P) to be correctly aligned when it is contacted and abutted to the working plane (21) of the machine (2).
2. Handling device (4) according to the preceding clause, characterized
   in that the gripping unit (44) is movable between a first position, or resting position, and a second position, or operating position, and
   in that it comprises first elastic means (51), coupled to said at least one supporting element (43) and to the gripping unit (44), and configured to keep the gripping unit (44) in said first position until the at least one panel is abutting the working plane.
3. Handling device (4) according to one of clauses 1 or 2, characterized in that the first elastic means (5) comprise a spiral spring and/or a pneumatic spring and/or a pneumatic actuator.
4. Handling device (4) according to any one of clauses 12-14, characterized
   in that the gripping device (441) is movable between a first position, or resting position, and a second position, or operating position, and
   in that it comprises second elastic means (52) coupled to said at least one gripping unit (44) and to said gripping device (441) and configured to keep the gripping device (441) in the first position until said at least one panel (P) is abutting to the working plane (21).
5. Handling device (4) according to the preceding clause, characterized in that said first elastic means (52) comprise at least one flexible rod integrally coupled to the gripping device (44) and constrained by contact with the at least one gripping unit (44).
6. Handling device (4) according to any one of clauses 12-16, characterized
   in that said longitudinal frame (42) comprises fifth guides, and
   in that the at least one supporting element (43) is slidingly coupled to said fifth guides, to be movable along the first direction (A), allowing the at least one panel (P) to be correctly aligned when it is positioned in abutment on the working plane (21) of the machine (2).
7. Handling device (4) according to the preceding clause, characterized
   in that said at least one supporting element (43) is movable between a first position, or resting position, and a second position, or operating position, and
   in that it comprises third elastic means coupled to the at least one supporting element (43) and to the frame (42) and configured to keep the at least one supporting element (43) in the first position until the at least one panel is abutted to the working plane (21).

### Advantages

An advantage of the present invention is that of proposing a handling device, capable of adapting to panels of different sizes.

It is also an advantage of the present invention that the handling device can be arranged or coupled with different types of mechanical arms.

A further advantage of the present invention is to propose a handling device that is able to cover the entire loading/unloading area of the machine.

Furthermore, an advantage of the present invention is that of providing a handling device capable of compensating for any alignment defects of a panel during the loading step.

A further advantage of the invention is that of providing a handling device capable of cushioning the abutment positioning of a panel during the loading phase.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (2) for working pieces made of wood, plastic, glass, metals, composite materials, comprising
a working plane (21), designed to support at least one panel (P) to be worked, and a working unit (24), for working the piece when it is arranged on said working plane (21),
**characterized in that** it comprises
a moving unit (3) for loading and/or unloading said at least one panel onto/from said working plane (21), and
a handling device (4), coupled to said moving unit (3), wherein said moving unit (3) comprises
a base frame (41), rotatably coupled to said moving unit (3), and having first moving means (411, 412, 413),
a longitudinal frame (42), coupled to said first moving means (411, 412, 413) of said base frame (41), to allow said longitudinal frame (42) to translate with respect to said base frame (41) along a first direction (A), wherein said longitudinal frame (42) comprises
second moving means (47), for moving said longitudinal frame (42) with respect to said basic frame (41) along a second direction (B) perpendicular to said first direction (A), and
one or more transversal beams (431, 432), equipped with gripping members, such as vacuum cups (44), associated with said longitudinal frame (42).

2. Machine (2) according to the preceding claim, **characterized**
**in that** said one or more transversal beams (431, 432) are slidingly associated with said longitudinal frame (42), and
**in that** it comprises third moving means (421, 422) to move said one or more transversal beams (431, 432) along said second direction (B), with respect to said longitudinal frame (42).

3. Machine (2) according to the preceding claim, **characterized in that** said first moving means comprise
a first actuator or electric motor (411), associated with translation members (412), by means of a coupling plate (413),
wherein said translation members (412) comprise
at least two return pulleys (4121), arranged at the ends of the base frame (41), and
a transmission means, such as a belt (413), arranged around said two return pulleys (4121), wherein said transmission means are associated with said longitudinal frame (42).

4. Machine (2) according to any one of the preceding claims, **characterized in that** said second moving means (47) comprise a pneumatic moving unit (471), to allow relative moving of the longitudinal frame (42) with respect to the base frame (41) along said second direction (B).

5. Machine (2) according to the preceding claim, **characterized in that** said pneumatic moving unit (471) is a piston-cylinder unit having a cylinder (4711), fixed to said base frame (41) and a piston (4712) fixed to said longitudinal frame (42).

6. Machine (2) according to any one of the preceding claims, **characterized in that** said third moving means comprises
a second actuator (421), such as an electric motor and similar,
further translation members (422, 423) each having
a couple of pulleys (4221, 4231), and
a respective transmission means, in particular a belt (4222, 4232), each coupled to a respective transversal beam (431, 432).

7. Machine (2) according to any one of the preceding claims, **characterized in that** it comprises two transversal beams (431, 432).

8. Machine (2) according to any one of the preceding claims, **characterized in that** said gripping members (44) are movable on said transversal beams (431, 432) along said first direction (A) and/or along a direction perpendicular to the plane identified by the respective transversal beam (431, 432) on which it is arranged.

9. Machine (2) according to any one of the preceding claims, **characterized in that** said moving unit (3) is a robot comprising
a base (31), fixable to the ground,
an articulated arm (32) having a support (321), capable of rotating with respect to said base (31), about a vertical axis (Z),
two arms (322, 323), wherein the first arm (322) has one end connected by means of a first joint (3240) to said support (321), while the second arm (323) is connected to a first end, to the second end of said first arm (322) by means of a second joint (325), and
a pin (326), coupled to said handling device (4), wherein the handling device (4) is capable of rotating around said pin (326).

10. Machine (2) according to any one of the preceding claims, **characterized**
**in that** said working unit (24) comprises a cutting station (240), wherein said cutting station (240) comprises a cutting unit equipped with at least a disc-shaped blade for cutting at least one panel along a cutting line (LT), and
**in that** it comprises at least one gripping and moving device (25), configured to advance the panels along said working plane (21) through the cutting station (240).

11. Machine (2) according to any one of claims 1-9, **characterized in that** it comprises
a movable crosspiece along a first axis, parallel to the development axis of said working plane (21), and comprising a working head, configured for the removable coupling with at least one working tool, wherein said working head is movable along at least a second linear translation axis, perpendicular to said first axis, and is rotating around one or more rotation axis.
